# FASCICULE DE BREVET EUROPEEN

(11) **EP 1 692 070 B1**
(45) Date de publication et mention de la délivrance du brevet: **17.04.2013**
(21) Numéro de dépôt: 04818441.0
(22) Date de dépôt: 12.10.2004
(51) Int. Cl.: B66C 9/16, B23Q 1/01, B23Q 1/26

(54) **CHARIOT ET PORTIQUE COMPRENANT UN TEL CHARIOT**
WAGEN UND PORTALKRAN MIT SOLCH EINEM WAGEN
CARRIAGE AND GANTRY CRANE COMPRISING ONE SUCH CARRIAGE

(30) Priorité: 29.10.2003 FR 0350744
(43) Date de publication de la demande: 23.08.2006
(73) Titulaire: CINETIC AUTOMATION, 70400 Héricourt (FR)
(72) Inventeur: CORPELET, Jean-Michel, F-90000 Belfort (FR)
(74) Mandataire: Novagraaf Technologies
(86) Numéro de dépôt international: PCT/FR2004/002585
(87) Numéro de publication internationale: WO 2005/047165

(56) Documents cités:
- CH-A- 428 137
- DE-A- 3 129 446
- DE-A- 3 804 572
- GB-A- 783 147
- GB-A- 1 151 941
- US-A- 1 752 026

## Description

L'invention concerne un chariot selon le préambule de la revendication 1 destiné à être placé transversalement entre deux poutres latérales sensiblement parallèles entre elles, le chariot étant agencé pour pouvoir être déplacé selon une direction longitudinale parallèle aux poutres. Un tel chariot est connu du US 1 752 026.

L'invention concerne également un portique comprenant deux poutres latérales sensiblement parallèles entre elles ainsi qu'un tel chariot.

De tels chariots et portiques sont utilisés dans les usines, les entrepôts, etc. pour la manutention et d'objets par exemple entre différents postes d'usinage et / ou de stockage.

Généralement, le chariot comprend d'une part un étrier à chacune de ses parties extrêmes latérales, les étriers étant destinés à coopérer avec les poutres latérales du portique, et d'autre part une poutre centrale mobile placée entre les étriers et solidaire de ceux-ci, ladite poutre pouvant porter différents outils ou organes de préhension d'objets.

Un ou plusieurs moteurs permettent le déplacement du chariot longitudinalement.

Selon un premier mode de réalisation, il est prévu sur le chariot un unique moteur central pourvu de deux arbres de transmission latéraux et de pignons, afin de permettre l'entraînement dudit chariot le long des poutres latérales.

Toutefois, cette solution est techniquement difficile à mettre en oeuvre et peut s'avérer coûteuse.

Selon un deuxième mode de réalisation, deux moteurs distincts entraînent chacun l'un des deux étriers du chariot. Des moyens de synchronisation des deux moteurs doivent alors être prévus, ce qui génère des coûts supplémentaires non négligeables et nécessite une maintenance accrue des installations.

En outre, malgré ces moyens de synchronisation, il demeure des risques que les étriers ne soient pas déplacés strictement simultanément et à la même vitesse.

Il s'ensuit que le chariot peut ne pas rester parfaitement transversal et risque d'être bloqué en oblique entre les poutres latérales. Ceci peut survenir même si le décalage entre les positions des deux étriers n'est que de quelques millimètres.

De plus, compte tenu de la synchronisation imparfaite des deux étriers, de tels portiques ne permettent pas un déplacement du chariot avec la précision requise, de l'ordre du millimètre.

Par ailleurs, quel que soit le mode d'entraînement des étriers et sa performance, il existe une autre cause pouvant conduire au coincement du chariot ou nuire à la précision du portique.

Il s'agit du défaut de parallélisme des poutres latérales. Ceci peut être dû à la fabrication même des poutres, dont il est difficile de garantir la rectitude compte tenu de leur grande longueur - une vingtaine de mètres par exemple. Ce défaut peut également provenir de la déformation des poutres au cours du temps, après plusieurs mois ou plusieurs années d'utilisation du portique.

L'invention vise à résoudre les problèmes posés par l'art antérieur, en proposant un chariot et un portique économiques garantissant une excellente précision de déplacement du chariot sans risque de coincement entre les poutres latérales, et ce malgré le non parallélisme des poutres latérales ou une synchronisation imparfaite du déplacement des deux étriers.

A cet effet, et selon un premier aspect, l'invention concerne un chariot destiné à être placé sensiblement transversalement entre une première et une deuxième poutres latérales sensiblement parallèles entre elles selon la revendication 1.
- un étrier à chacune de ses parties extrêmes latérales, un premier étrier étant apte à coopérer avec la première poutre latérale et un deuxième étrier étant apte à coopérer avec la deuxième poutre latérale de sorte à permettre le déplacement du chariot selon une direction longitudinale sensiblement parallèle aux poutres latérales ;
- une poutre centrale placée entre les étriers ;
- des premiers moyens de liaison agencés entre une première extrémité latérale de la poutre centrale et le premier étrier et des deuxièmes moyens de liaison agencés entre une deuxième extrémité latérale de la poutre centrale et le deuxième étrier, lesdits moyens de liaison étant agencés pour permettre le déplacement d'un étrier par rapport à l'autre, selon six degrés de liberté, avec une amplitude limitée.

La poutre centrale n'étant pas solidarisée aux étriers, les étriers peuvent se déplacer l'un par rapport à l'autre, entraînant une déformation du chariot (mouvement de la poutre centrale par rapport aux étriers).

Les moyens de liaison entre les extrémités latérales de la poutre centrale et les étriers permet d'accommoder et de compenser les erreurs de synchronisation des moteurs ou les déformations des poutres latérales. Le déplacement de la poutre centrale par rapport aux étriers permet ainsi d'obtenir plus de souplesse et d'éviter le blocage du chariot, et ce malgré le déplacement constant d'un étrier par rapport à l'autre.

Selon l'invention, les premiers moyens de liaison comprennent une liaison rotule et les deuxièmes moyens de liaison un appui vertical et des moyens de coulissement transversal, ledit appui et lesdits moyens de coulissement transversal étant agencés pour autoriser le mouvement de rotation de la poutre centrale par rapport au premier étrier autour des axes longitudinal, transversal et vertical avec une amplitude limitée.

Selon d'autres caractéristiques les moyens de coulissement transversal peuvent intégrer des moyens de limitation de l'amplitude de la rotation de la poutre centrale par rapport au premier étrier autour des axes longitudinal, transversal et vertical.

Selon une réalisation possible les premiers moyens de liaison comprennent en outre des moyens de coulissement transversal situés à distance de la liaison rotule, lesdits moyens de coulissement transversal étant agencés pour autoriser le mouvement de rotation de la poutre centrale par rapport au premier étrier autour des axes longitudinal, transversal et vertical avec une amplitude limitée.

Par exemple, au moins l'un des moyens de coulissement transversal comprend :
- d'une part une pièce présentant la forme d'un U dont les branches sont situées dans un plan sensiblement horizontal et dirigées transversalement vers la poutre centrale, les extrémités desdites branches étant fixées rigidement à un étrier du chariot ;
- d'autre part une tige fixée rigidement à la poutre centrale et s'étendant orthogonalement à la pièce en U, ladite tige étant agencée pour être insérée dans l'espace formé entre les branches de la pièce en U avec jeu de sorte à permettre le coulissement transversal de la poutre centrale par rapport à ladite partie extrême du chariot et à autoriser la rotation de la poutre centrale par rapport au premier étrier autour des axes longitudinal, transversal et vertical selon une certaine amplitude, grâce à la liaison rotule.

Le deuxième étrier peut comprendre deux pièces en U alignées verticalement et situées à distance l'une de l'autre, la poutre centrale étant pourvue de deux tiges verticales alignées agencées pour être insérées chacune dans l'une desdites pièce en U.

Par exemple, le premier étrier comprend un logement concave, et une pièce convexe de forme complémentaire à celle dudit logement est fixée rigidement à la poutre centrale de façon à pouvoir coopérer avec le logement pour former la liaison rotule.

Selon une réalisation possible, le premier étrier comprend d'une part un logement concave présentant un axe sensiblement vertical et d'autre part une pièce en U, et la poutre centrale est pourvue d'une tige verticale agencée pour être insérée dans la pièce en U de sorte à être placée de façon sensiblement alignée avec l'axe du logement concave.

Par exemple, une première pièce intermédiaire est rigidement fixée sur chacun des deux étriers, et une deuxième pièce intermédiaire est rigidement fixée sur chacune des extrémités latérales de la poutre centrale, les moyens de liaison entre la poutre et les étriers étant portés par lesdites pièces intermédiaires.

Selon un deuxième aspect, l'invention concerne un portique comprenant une première et une deuxième poutres latérales sensiblement parallèles et un chariot tel que précédemment décrit, ledit chariot étant placé sensiblement transversalement entre les poutres latérales, et comprenant un étrier à chacune de ses parties extrêmes latérales, un premier étrier étant apte à coopérer avec la première poutre latérale et un deuxième étrier étant apte à coopérer avec la deuxième poutre latérale de sorte à permettre le déplacement du chariot selon une direction longitudinale sensiblement parallèle aux poutres latérales.

Les autres caractéristiques de l'invention résultent de la description qui suit de modes de réalisation, description effectuée en référence aux figures annexées dans lesquelles :
- la figure 1 est une vue schématique, en perspective, d'un portique selon l'invention, les moyens de liaison n'ayant pas été représentés ;
- la figure 2 est une vue en perspective d'un chariot selon l'invention ;
- la figure 3 est une vue en coupe du chariot de la figure 2, selon la ligne AA, la poutre centrale n'étant pas représentée ;
- les figures 4a et 4b représentent des pièces intermédiaires destinées à être rigidement fixées sur les étriers du chariot ;
- les figures 5a et 5b représentent des pièces intermédiaires destinées à être rigidement fixées sur les extrémités latérales de la poutre centrale du chariot ;
- les figures 6 à 8 sont des représentations schématiques montrant les déformations du chariot lorsqu'un étrier est déplacé par rapport à l'autre.

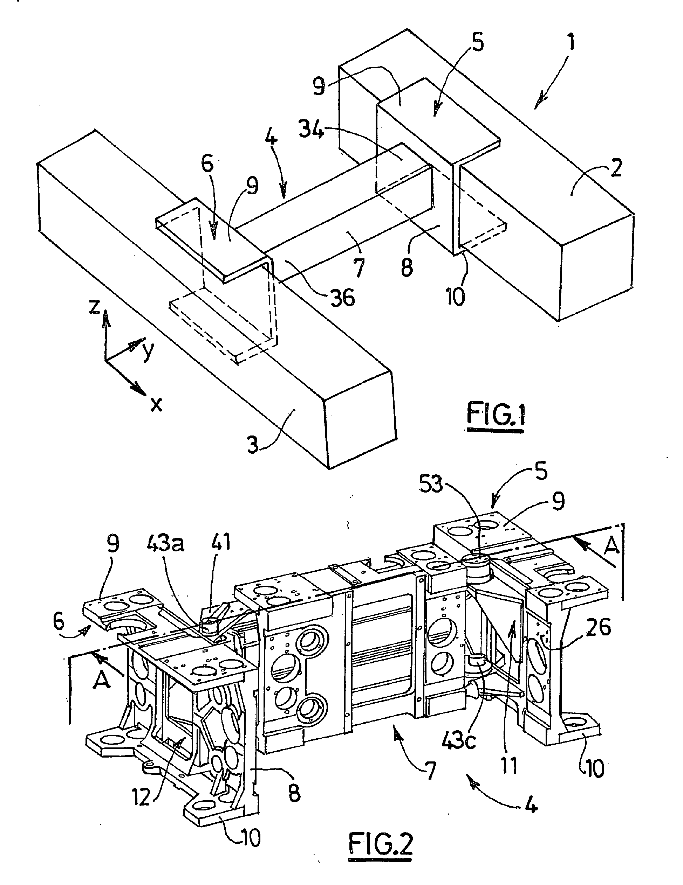

On se réfère tout d'abord à la figure 1 qui représente un portique quadratique 1 comprenant une première et une deuxième poutres latérales 2, 3 sensiblement parallèles entre elles. Les poutres peuvent avoir une longueur atteignant 20 à 30 m, et être espacées de 5 à 10 m par exemple.

La direction x des poutres latérales 2, 3 est dite longitudinale, et la direction orthogonale y située dans le plan desdites poutres est dite transversale.

On définit également une troisième direction z, orthogonale aux deux autres. La direction z est dite verticale. Toutefois, ce terme n'est employé qu'à fin de simplification de la description, le plan formé par les poutres latérales 2, 3 pouvant ne pas être horizontal mais incliné.

Une localisation à proximité de l'axe longitudinal situé à mi distance entre les deux poutres latérales 2, 3 est dite « intérieure », par opposition à une localisation à distance de cet axe, dite « extérieure ».

Les termes « supérieur », « inférieur », « dessus », « dessous », « haut », « bas » seront employés en référence à la direction z. Les termes « avant » et « arrière » seront employés en référence à la direction x, lorsque l'on considère que le chariot se déplace dans le sens de la flèche x de la figure 1. Bien entendu, ceci ne vise qu'à simplifier la description, et le chariot peut également se déplacer dans le sens inverse.

Le portique 1 comprend en outre un chariot 4 placé sensiblement transversalement entre les poutres latérales 2, 3.

Le chariot 4 comprend lui-même un étrier à chacune de ses parties extrêmes latérales. Un premier étrier 5 est apte à coopérer avec la première poutre latérale 2 et un deuxième étrier 6 est apte à coopérer avec la deuxième poutre latérale 3, de sorte à permettre le déplacement du chariot selon la direction x.

Le chariot 4 comporte également une poutre centrale 7, placée entre les étriers 5, 6, et reliée à ceux-ci par des moyens de liaison qui seront décrits par la suite. La poutre centrale 7 n'est pas fixée rigidement aux étriers 5, 6.

Le chariot 4 est déplacé longitudinalement grâce à un ou plusieurs moteurs non représentés. Le ou les moteurs peuvent être embarqués et assurer le déplacement du chariot par un système de pignons coopérant avec une crémaillère prévue sur les poutres latérales. Selon une autre réalisation possible, le ou les moteurs peuvent être fixes par rapport au bâtiment dans lequel se situe le portique 1 et entraîner le moteur via un système de chaînes ou de courroies.

Dans le cas où deux moteurs sont prévus, des moyens en assurent la synchronisation.

On décrit à présent plus particulièrement le chariot 4 et les moyens de liaison agencés entre la poutre centrale 7 et les étriers 5, 6.

Dans le mode de réalisation représenté, les étriers 5, 6 sont identiques. Un étrier 5, 6 présente la forme d'un U comprenant une paroi verticale 8 et deux parois horizontales 9, 10 s'étendant transversalement depuis la paroi verticale 8 vers l'extérieur - c'est-à-dire vers la poutre latérale 2, 3 avec laquelle l'étrier 5, 6 considéré coopère.

L'étrier 5, 6 est ainsi apte à être placé autour d'une poutre latérale 2, 3 et à coulisser longitudinalement le long de celle-ci.

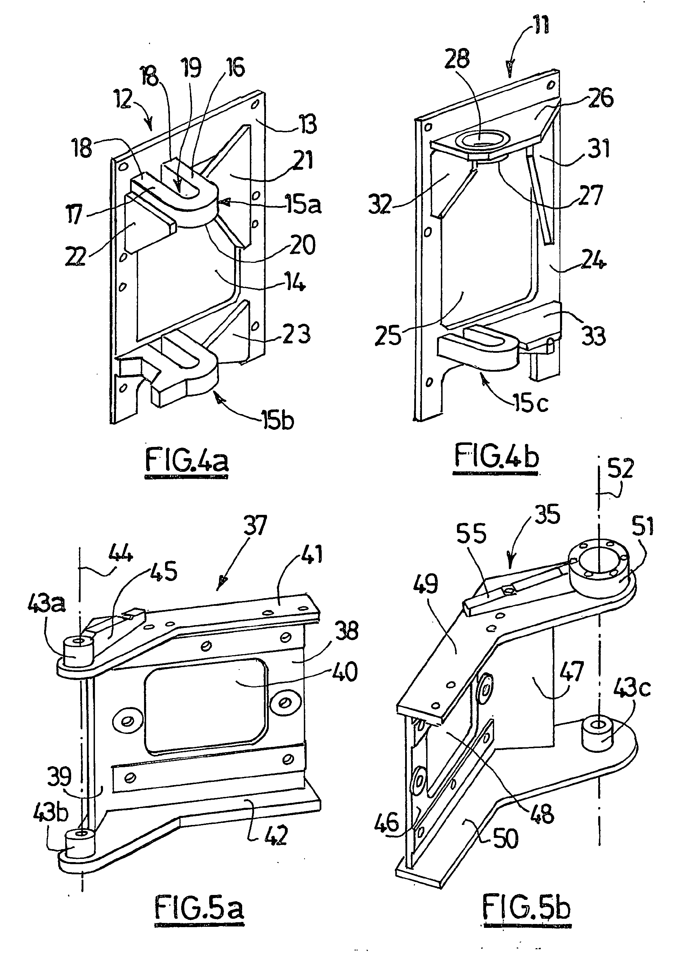

Une pièce intermédiaire est rigidement fixée sur la paroi verticale 8 de chaque étrier 5, 6, du côté intérieur (opposé aux parois horizontales 9, 10). Le premier étrier 5 porte la pièce intermédiaire 11 de la figure 4b, le deuxième étrier 6 portant une pièce intermédiaire 12 différente, représentée sur la figure 4a.

On décrit tout d'abord la pièce intermédiaire 12 représentée sur la figure 4a.

La pièce intermédiaire 12 comprend une plaque sensiblement rectangulaire 13 pourvue d'un orifice central 14 également rectangulaire, et est destinée à être fixée, par exemple par vissage, sur le côté intérieur de la paroi verticale 8 du deuxième étrier 6.

La plaque 13 comprend une première pièce 15a présentant la forme d'un U dont les branches 16, 17 sont situées dans un plan sensiblement horizontal et dirigées transversalement vers la poutre centrale 7, les extrémités 18 desdites branches 16, 17 étant fixées rigidement à la plaque 13.

Il existe ainsi un espace 19 formé entre les branches 16, 17 de la première pièce en U 15a, le fond 20 de ladite première pièce en U 15a et la plaque 13.

La première pièce en U 15a est située dans la zone du coin supérieur avant de la plaque 13, au-dessus de l'orifice 14.

La plaque 13 comprend également une deuxième pièce en U 15b de forme générale identique et de mêmes dimensions que la première pièce en U 15a, située dans la zone du coin inférieur avant de la plaque 13, en-dessous de l'orifice 14, à distance de la première pièce en U 15a.

Les deux pièces en U 15a, 15b sont alignées verticalement.

Enfin, des plaques de renfort 21, 22, 23 sont prévues entre la plaque 13 et les deux pièces en U 15a, 15b.

La pièce intermédiaire 11 représentée sur la figure 4b comprend une plaque sensiblement rectangulaire 24 pourvue d'un orifice central 25 également rectangulaire, et est destinée à être fixée, par exemple par vissage, sur le côté intérieur de la paroi verticale 8 du premier étrier 5.

La plaque 24 comprend tout d'abord une troisième pièce en U 15c de forme générale identique et de mêmes dimensions que la première pièce en U 15a, s'étendant sensiblement horizontalement et transversalement vers la poutre centrale 7. La troisième pièce en U 15c est fixée rigidement par ses extrémités à la plaque 11, dans la zone du coin inférieur arrière, en-dessous de l'orifice 25.

La plaque 24 comprend ensuite une paroi horizontale 26 s'étendant sensiblement horizontalement et transversalement vers la poutre centrale 7, dans la zone supérieure de la plaque 24, au-dessus de l'orifice 25.

Dans la zone arrière de la plaque 24, la paroi horizontale 26 présente un décrochement 27 vers le bas, qui forme en partie la paroi latérale et le fond d'une cavité débouchant vers le haut par un orifice 28 en forme de disque.

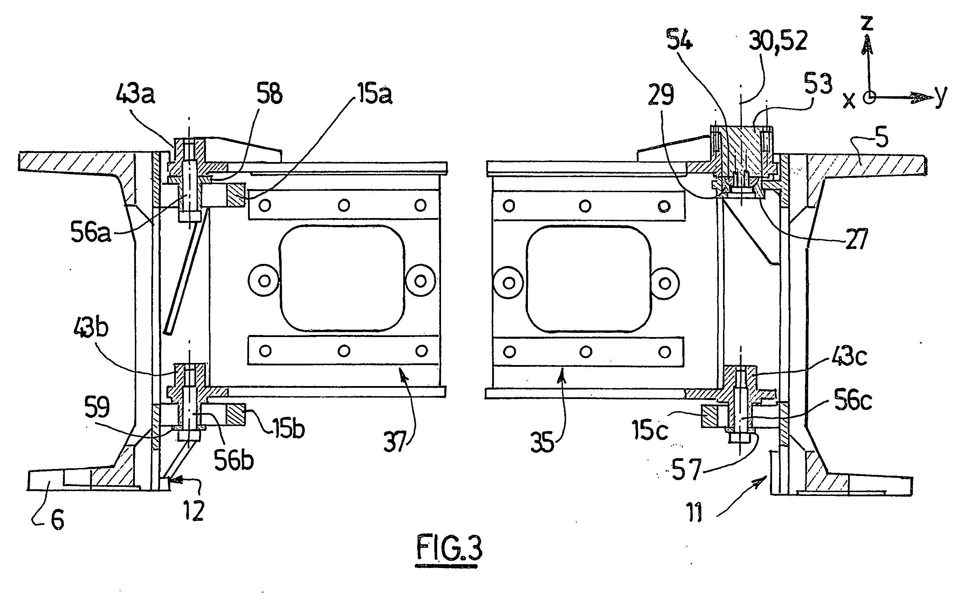

Dans la cavité est placé un anneau 29 d'axe 30 et de diamètre extérieur sensiblement égal au diamètre intérieur de la cavité formée par le décrochement 27. L'anneau 29 présente une face intérieure supérieure biseautée de sorte à former un logement concave, comme illustré sur la figure 3.

La troisième pièce en U 15c est placée verticalement au droit de l'orifice 28 de la paroi horizontale 26, comme cela sera précisé plus loin.

Enfin, des plaques de renfort 31, 32, 33 sont prévues entre la plaque 24 et d'une part la troisième pièce en U 15c et d'autre part la paroi horizontale 26.

Par ailleurs, une pièce intermédiaire est rigidement fixée sur chacune des extrémités latérales de la poutre centrale 7, du côté extérieur (vers les poutres latérales 2, 3). La première partie extrême 34 de la poutre centrale 7 - reliée au premier étrier 5 - porte la pièce intermédiaire 35 de la figure 5b, la deuxième partie extrême 36 de la poutre centrale 7 - reliée au deuxième étrier 6 - porte la pièce intermédiaire 37 différente, représentée sur la figure 5a.

On décrit tout d'abord la pièce intermédiaire 37 représentée sur la figure 5a.

La pièce intermédiaire 37 comprend une plaque rectangulaire pliée dont les deux parties 38, 39, de part et d'autre de la zone de pliage, sont situées dans un plan vertical. La première partie 38, pourvue d'un orifice central 40 sensiblement rectangulaire, est destinée à être fixée, par exemple par vissage, à la deuxième partie extrême 36 de la poutre centrale 7, et peut être au moins partiellement insérée dans une cavité de la poutre centrale 7 prévue à cet effet.

La deuxième partie 39 s'étend vers le deuxième étrier 6, et sa largeur est plus petite que la largeur de la première partie 38, par exemple voisine du tiers. L'angle entre les deux parties 38, 39 de la plaque rectangulaire pliée est par exemple compris entre 110 et 160°.

La pièce intermédiaire 37 comprend en outre une paroi horizontale supérieure 41 et une paroi horizontale inférieure 42 sensiblement identiques, et présentant une forme de V plan correspondant à la forme de la plaque rectangulaire pliée.

La partie extrême extérieure de chacune des parois horizontales 41, 42 comprend un cylindre creux 43a, 43b s'étendant depuis ladite paroi horizontale 41, 42 vers le haut sur une hauteur de l'ordre de 10 à 20 % de la hauteur de la plaque rectangulaire pliée. Les deux cylindres 43a, 43b sont sensiblement identiques et de même axe 44 vertical.

En outre, un renfort 45 est prévu entre la paroi extérieure du cylindre supérieur 43a et la paroi horizontale supérieure 41.

De façon similaire, la pièce intermédiaire 35 représentée sur la figure 5b comprend une plaque rectangulaire pliée dont les deux parties 46, 47 sont situées dans un plan vertical et forment un angle pouvant être compris entre 110 et 160°. Il peut s'agir d'une plaque pliée identique à celle décrite en référence à la figure 5a.

La première partie 46, pourvue d'un orifice central 48 sensiblement rectangulaire, est destinée à être fixée à la première partie extrême 34 de la poutre centrale 7, et peut être au moins partiellement insérée dans une cavité de la poutre centrale 7 prévue à cet effet. La deuxième partie 47, moins large, s'étend vers le premier étrier 5.

La pièce intermédiaire 35 comprend en outre une paroi horizontale supérieure 49 et une paroi horizontale inférieure 50 sensiblement identiques, et présentant une forme de V plan correspondant à la forme de la plaque rectangulaire pliée.

La partie extrême extérieure de la paroi horizontale inférieure 50 comprend un cylindre creux 43c s'étendant depuis ladite paroi horizontale inférieure 50 vers le haut sur une hauteur de l'ordre de 10 à 20 % de la hauteur de la plaque rectangulaire pliée.

Par ailleurs, la partie extrême extérieure de la paroi horizontale supérieure 49 comprend un cylindre creux 51 s'étendant depuis ladite paroi horizontale supérieure 49 vers le haut sur une hauteur de l'ordre de10 à 20 % de la hauteur de la plaque rectangulaire pliée. Le cylindre creux 51 possède le même axe 52 que le cylindre creux 43c, mais des diamètres intérieur et extérieur supérieurs à ceux du cylindre creux 43c.

Une pièce de liaison est fixée à l'intérieur du cylindre creux 51.

Cette pièce de liaison comprend d'une part une partie supérieure en forme de cylindre plein 53, de diamètre sensiblement identique au diamètre intérieur du cylindre creux 51. Le cylindre plein 53 est muni de rebords supérieurs extérieurs pour sa fixation - notamment par vissage - au cylindre creux 51. La face inférieure du cylindre plein 53 est située sensiblement dans le même plan horizontal que la face inférieure du cylindre creux 51.

La pièce de liaison comprend d'autre part une partie en forme de calotte sphérique 54. La calotte sphérique 54 est fixée à la face inférieure du cylindre plein 53 de façon à être coaxiale audit cylindre plein 53 et que la partie convexe de la calotte sphérique 54 soit dirigée vers le bas.

Les dimensions de la calotte sphérique 54 sont complémentaires de celles de l'anneau 29, de sorte que la coopération de ces deux éléments forme une liaison rotule. Selon une réalisation possible, la portion inférieure de la calotte sphérique 54, située à l'intérieur de l'anneau 29, est tronquée (voir figure 3). Enfin, un renfort 55 est prévu entre la paroi extérieure du cylindre creux 51 et la paroi horizontale supérieure 49.

Les pièces intermédiaires 35, 37 rigidement fixées à la poutre centrale 7 du chariot 4 sont destinées à être associées aux pièces intermédiaires 11, 12 rigidement fixées aux étriers 5, 6, formant ainsi des moyens de liaison permettant le déplacement de la poutre centrale 7 par rapport aux étriers, et donc également le déplacement d'un étrier par rapport à l'autre (voir figure 3).

Dans un premier temps, on décrit l'association du premier étrier 5 à la première partie extrême 34 de la poutre centrale 7.

D'une part, en partie supérieure, le premier étrier 5 est associé à la partie extrême 34 de la poutre centrale 7 par une liaison rotule formée au niveau des pièces intermédiaires 11, 35 par la coopération entre la calotte sphérique 54 et l'anneau 29 biseauté, comme indiqué précédemment (les axes 30 et 52 coïncidant sensiblement).

D'autre part, en partie inférieure, le premier étrier 5 est associé à la partie extrême 34 de la poutre centrale 7 par des moyens de coulissement transversal.

A cet effet, une tige 56c - par exemple une tige filetée muni d'un écrou en partie inférieure - est insérée verticalement vers le haut dans l'espace 19 ménagé dans la pièce en U 15c, et fixée rigidement à l'intérieur du cylindre creux 43c. Des moyens de blocage axial 57, tel que rondelle, sont prévus sur la tige, sous la pièce en U 15c et légèrement en retrait par rapport à ladite pièce en U 15c, pour autoriser le déplacement vertical vers le haut de la pièce intermédiaire 35 par rapport à la pièce intermédiaire 11 mais limiter l'amplitude de ce déplacement.

Un jeu vertical est également prévu entre la face inférieure du cylindre creux 43c et la face supérieure de la pièce en U 15c.

Le diamètre de cette tige 56c est inférieur à la distance entre les branches de la pièce en U 15c et à la distance entre le fond de la pièce en U 15c et la plaque 24. Ainsi, grâce à ces jeux longitudinal et transversal, le mouvement de rotation de la pièce intermédiaire 35 par rapport à la pièce intermédiaire 11 est possible - mais avec une amplitude limitée - autour des axes x et y.

Bien entendu, le mouvement de rotation autour de l'axe z est possible par pivotement autour de l'axe 30, 52.

Dans un deuxième temps, on décrit l'association du deuxième étrier 6 à la deuxième partie extrême 36 de la poutre centrale 7.

En partie supérieure et en partie inférieure, le deuxième étrier 6 est associé à la partie extrême 36 de la poutre centrale 7 par des moyens de coulissement transversal, formés par la coopération entre les pièces en U 15a, 15b d'une part et des tiges 56a, 56b d'autre part.

Une première tige 56a est insérée dans l'espace 19 ménagé dans la première pièce en U 15a et fixée rigidement à l'intérieur du cylindre creux 43a. Une rondelle 58 est interposée horizontalement entre la face inférieure du cylindre creux 43a et la face supérieure de la pièce en U 15a, formant ainsi un appui vertical.

Une deuxième tige 56b est insérée dans l'espace 19 ménagé dans la deuxième pièce en U 15b et fixée rigidement à l'intérieur du cylindre creux 43b. Des moyens de blocage axial 59 sont prévus sur la tige 56b, sous la pièce en U 15b et légèrement en retrait par rapport à ladite pièce en U 15b, pour autoriser le déplacement vertical vers le haut de la pièce intermédiaire 37 par rapport à la pièce intermédiaire 12 mais limiter l'amplitude de ce déplacement.

Un jeu vertical est également prévu entre la face inférieure du cylindre creux 43b et la face supérieure de la pièce en U 15b.

Les deux tiges 56a, 56b sont sensiblement identiques et de même axe, leur diamètre étant inférieur à la distance entre les branches des pièces en U 15a, 15b et à la distance entre le fond de chaque pièce en U 15a, 15b et la plaque 13. Ces jeux longitudinal et transversal permettent le mouvement de rotule autour des axes x et y avec une amplitude limitée.

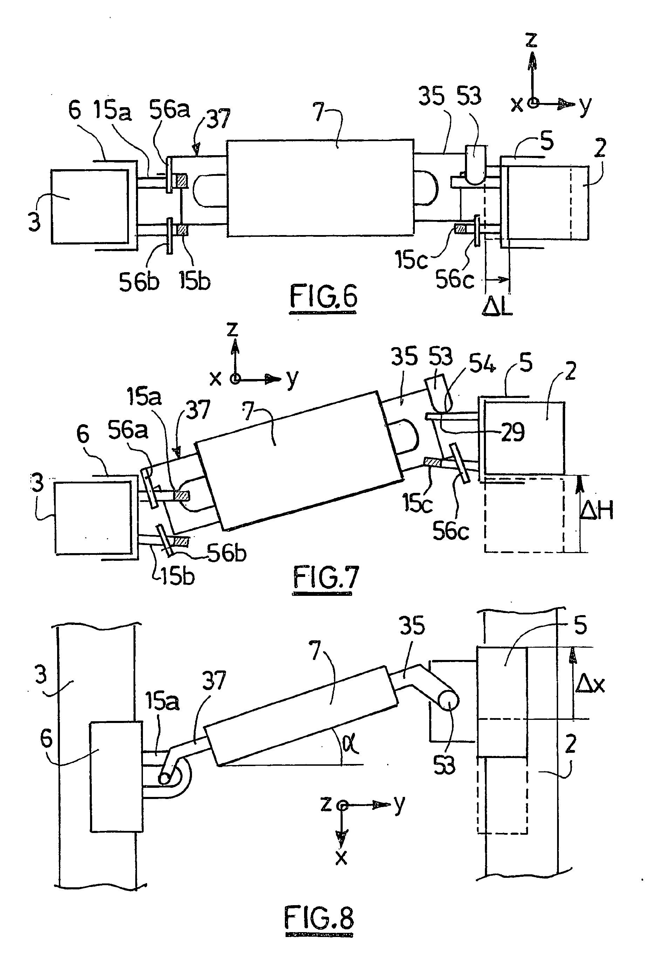

On se réfère à présent aux figures 6 à 8 qui illustrent les déformations possibles du chariot suite à un déplacement d'un étrier par rapport à l'autre, ce déplacement étant dû par exemple à une déformation des poutres latérales 2, 3 ou à une synchronisation imparfaite des moteurs entraînant les étriers 5, 6. Les pointillés illustrent la position normale de la première poutre latérale 2 ou du premier étrier 5, c'est-à-dire sans déformation du chariot 4.

La figure 6 illustre le cas où la première poutre latérale 2 est éloignée horizontalement de la deuxième poutre latérale 3 d'une distance supplémentaire ΔL par rapport à la normale.

Les tiges 56a, 56b sont alors déplacées transversalement dans les espaces 19 ménagés dans les pièces en U 15a, 15b, vers la première poutre latérale 2. Ce coulissement vise à compenser l'éloignement des poutres latérales 2, 3, en permettant l'augmentation de la distance entre le deuxième étrier 6 et la deuxième partie extrême 36 de la poutre centrale 7.

Un décalage ΔL de l'ordre de 10 mm peut ainsi être accepté et compensé sans entraîner de problème de blocage du chariot ou de perte de précision.

La figure 7 illustre le cas où la première poutre latérale 2 est éloignée verticalement de la deuxième poutre latérale 3 d'une distance supplémentaire ΔH par rapport à la normale.

La calotte sphérique 34 pivote alors dans l'anneau 29, autour de l'axe x. Ce mouvement est possible grâce à l'existence d'un jeu vertical et transversal entre les tiges 56a, 56b, 56c et les pièces en U 15a, 15b, 15c.

L'invention permet ainsi de compenser un décalage ΔH de l'ordre de ±4mm/m.

Enfin, la figure 8 illustre le cas où le premier étrier 5 est décalé vers l'arrière d'une distance Δx par rapport au deuxième étrier 6, notamment suite à une mauvaise synchronisation des moteurs entraînant séparément les deux étriers 5, 6.

La calotte sphérique 34 pivote alors dans l'anneau 29, autour de l'axe z, de même que la tige 56c dans l'espace 19 ménagé dans la pièce en U 15c.

Les tiges 56a, 56b peuvent elles aussi pivoter dans l'espace 19 ménagé dans les pièces en U 15a, 15b, autour de l'axe z, mais également se déplacer horizontalement dans ledit espace 19 compte tenu de l'existence des jeux longitudinal et transversal.

La poutre centrale 7 peut ainsi être inclinée, dans le plan horizontal et par rapport à la direction y, d'un angle α de l'ordre de 5°.

En résumé, la liaison rotule permet donc d'accepter les mouvements de rotation dans tous les sens, ces mouvements étant possibles mais limités par l'existence des jeux longitudinal, transversal et vertical entre les tiges 56a, 56b, 56c et les pièces en U 15a, 15b, 15c. En outre, le coulissement transversal est également prévu.

Bien entendu, ces mouvements élémentaires peuvent être combinés entre eux et varier au cours du déplacement du chariot le long des poutres latérales 2, 3, le mouvement global résultant étant compensé par la coopération appropriée des différents moyens de liaison prévus sur le chariot 4.

L'invention permet de répondre aux exigences en matière de précision et de robustesse de tels portiques. A titre d'exemple, le chariot peut être déplacé à une vitesse de 3 m/s et devoir être arrêté sur une distance de 20 cm, une précision de l'ordre du millimètre étant généralement demandée.

## Revendications

1. Chariot destiné être placé sensiblement transversalement entre une première et une deuxième poutres latérales (2,3) sensiblement parallèles entre elles, le chariot (4) comprenant :
- un étrier à chacune de ses parties extrêmes latérales, un premier étrier (5) étant apte à coopérer avec la première poutre latérale (2) et un deuxième étrier (6) étant apte à coopérer avec la deuxième poutre latérale (3) de sorte à permettre le déplacement du chariot (4) selon une direction longitudinale (x) sensiblement parallèle aux poutres latérales ;
- une poutre centrale (7) placée entre les étriers (5,6) ;
- des premiers moyens de liaison (54,29, 56c, 15c) agencés entre une première extrémité latérale (34) de la poutre centrale (7) et le premier étrier (5) et des deuxièmes moyens de liaison (58,56a, 15a, 56b, 15b) agencés entre une deuxième extrémité latérale (36) de la poutre centrale (7) et le deuxième étrier (6), lesdits moyens de liaison étant agencés pour permettre le déplacement d'un étrier par rapport à l'autre, selon six degrés de liberté, avec une amplitude limitée, **caractérisé en ce que** lesdits premiers moyens de liaison comprennent une liaison rotule (54,29) et **en ce que** lesdits deuxièmes moyens de liaison comprennent un appui vertical (58,15a) et des moyens de coulissement transversal (56a, 15a, 56b, 15b), ledit appui et lesdits moyens de coulissement transversal étant agencés pour autoriser le mouvement de rotation de la poutre centrale (7) par rapport au premier étrier (5) autour des axes longitudinal (x), transversal (y) et vertical (z) avec une amplitude limitée.

2. Chariot selon la revendication 1, **caractérisé en ce que** les moyens de coulissement transversal (56a, 15a, 56b, 15b) intègrent des moyens de limitation de l'amplitude de la rotation de la poutre centrale (7) par rapport au premier étrier (5) autour des axes longitudinal, transversal et vertical.

3. Chariot selon la revendications 1 ou 2, **caractérisé en ce que** les premiers moyens de liaison comprennent en outre des moyens de coulissement transversal (56c, 15c) situés à distance de la liaison rotule, lesdits moyens de coulissement transversal étant agencés pour autoriser le mouvement de rotation de la poutre centrale (7) par rapport au premier étrier (5) autour des axes longitudinal, transversal et vertical avec une amplitude limitée.

4. Chariot selon l'une quelconque des revendications précédentes, **caractérisé en ce qu'**au moins l'un des moyens de coulissement transversal comprend : - d'une part une pièce (15a, 15b, 15c) présentant la forme d'un U dont les branches (16,17) sont situées dans un plan sensiblement horizontal et dirigées transversalement vers la poutre centrale (7), les extrémités (18) desdites branches étant fixées rigidement à un étrier (5,6) du chariot (4) ; - d'autre part une tige (56a, 56b, 56c) fixée rigidement à la poutre centrale (7) et s'étendant orthogonalement à la pièce en U (15a, 15b, 15c), ladite tige étant agencée pour tre insérée dans l'espace (19) formé entre les branches (16,17) de la pièce en U avec jeu de sorte à permettre le coulissement transversal de la poutre centrale (7) par rapport à ladite partie extrême du chariot (4) et à autoriser la rotation de la poutre centrale (7) par rapport au premier étrier (5) autour des axes longitudinal, transversal et vertical selon une certaine amplitude, grâce à la liaison rotule.

5. Chariot selon la revendication 4, **caractérisé en ce que** le deuxième étrier (6) comprend deux pièces en U (15a, 15b) alignées verticalement et situées à distance l'une de l'autre et **en ce que** la poutre centrale (7) est pourvue de deux tiges verticales (56a, 56b) alignées, agencées pour être insérées chacune dans l'une desdites pièce en U (15a, 15b).

6. Chariot selon l'une quelconque des revendications précédentes, **caractérisé en ce que** le premier étrier (5) comprend un logement concave (27,29) et **en ce qu'**une pièce convexe (54) de forme complémentaire à celle dudit logement est fixée rigidement à la poutre centrale (7) de façon à pouvoir coopérer avec le logement pour former la liaison rotule.

7. Chariot selon la revendication 6, **caractérisé en ce que** le premier étrier (5) comprend d'une part un logement concave (27,29) présentant un axe sensiblement vertical (30) et d'autre part une pièce en U (15c), et **en ce que** la poutre centrale (7) est pourvue d'une tige verticale (56c) agencée pour être insérée dans la pièce en U (15c) de sorte à être placée de façon sensiblement alignée avec l'axe (30) du logement concave.

8. Chariot selon l'une quelconque des revendications précédentes, **caractérisé en ce qu'**une première pièce intermédiaire (11,12) est rigidement fixée sur chacun des deux étriers (5,6), et **en ce qu'**une deuxième pièce intermédiaire (35, 37) est rigidement fixée sur chacune des extrémités latérales (34,36) de la poutre centrale (7), les moyens de liaison entre la poutre centrale (7) et les étriers (5,6) étant portés par lesdites pièces intermédiaires.

9. Portique comprenant une première et une deuxième poutres latérales (2, 3) sensiblement parallèles et un chariot (4) selon l'une quelconque des revendications précédentes, ledit chariot (4) étant placé sensiblement transversalement entre les poutres latérales (2,3), et comprenant un étrier à chacune de ses parties extrêmes latérales, un premier étrier (5) étant apte à coopérer avec la première poutre latérale (2) et un deuxième étrier (6) étant apte à coopérer avec la deuxième poutre latérale (3) de sorte à permettre le déplacement du chariot (4) selon une direction longitudinale (x) sensiblement parallèle aux poutres latérales (2,3).

## Claims

1. Carriage designed to be positioned substantially transversely between a first and a second lateral girder (2, 3) which are substantially parallel to each other, the carriage (4) comprising:
- a bracket at each of its lateral end portions, a first bracket (5) being suitable for engaging with the first lateral girder (2) and a second bracket (6) being suitable for engaging with the second lateral girder (3) so as to allow the carriage (4) to move in a longitudinal direction (x) substantially parallel to the lateral girders;
- a central girder (7) positioned between the brackets (5, 6);
- first connection means (54, 29, 56c, 15c) arranged between a first lateral end (34) of the central girder (7) and the first bracket (5) and second connection means (58, 56a, 15a, 56b, 15b) arranged between a second lateral end (36) of the central girder (7) and the second bracket (6), said connection means being arranged so as to allow one bracket to move relative to the other, with six degrees of freedom, with limited amplitude, **characterized in that** said first connection means comprise a ball joint (54, 29) and **in that** said second connection means comprise a vertical support (58, 15a) and transverse-sliding means (56a, 15a, 56b, 15b), said support and said transverse-sliding means being arranged so as to allow the central girder (7) to rotate relative to the first bracket (5) about the longitudinal (x), transverse (y) and vertical (z) axes, with limited amplitude.

2. Carriage according to Claim 1, **characterized in that** the transverse-sliding means (56a, 15a, 56b, 15b) comprise means for limiting the amplitude of the rotation of the central girder (7) relative to the first bracket (5) about the longitudinal, transverse and vertical axes.

3. Carriage according to Claim 1 or 2, **characterized in that** the first connection means further comprise transverse-sliding means (56c, 15c) located at a distance from the ball joint, said transverse-sliding means being arranged to allow the central girder (7) to rotate relative to the first bracket (5) about the longitudinal, transverse and vertical axes, with limited amplitude.

4. Carriage according to any one of the preceding claims, **characterized in that** at least one of the transverse-sliding means comprises:
- on the one hand a U-shaped part (15a, 15b, 15c), the legs (16, 17) of which are in a substantially horizontal plane and are oriented transversely towards the central girder (7), the ends (18) of said legs being rigidly attached to a bracket (5, 6) of the carriage (4);
- on the other hand a rod (56a, 56b, 56c) rigidly attached to the central girder (7) and extending perpendicular to the U-shaped part (15a, 15b, 15c), said rod being arranged so as to be inserted into the space (19) formed between the legs (16, 17) of the U-shaped part with enough play to allow the central girder (7) to slide transversely relative to said end portion of the carriage (4) and to allow the central girder (7) to rotate relative to the first bracket (5) about the longitudinal, transverse and vertical axes, with a certain amplitude, by means of the ball joint.

5. Carriage according to Claim 4, **characterized in that** the second bracket (6) comprises two U-shaped parts (15a, 15b) aligned vertically and located at a distance from one another and **in that** the central girder (7) has two aligned vertical rods (56a, 56b) which are arranged so that each can be inserted into one of said U-shaped parts (15a, 15b).

6. Carriage according to any one of the preceding claims, **characterized in that** the first bracket (5) comprises a concave recess (27, 29) and **in that** a convex part (54) of a shape complementary to that of said recess is rigidly attached to the central girder (7) so as to be able to engage with the recess in order to form the ball joint.

7. Carriage according to Claim 6, **characterized in that** the first bracket (5) comprises on the one hand a concave recess (27, 29) having a substantially vertical axis (30) and on the other hand a U-shaped part (15c), and **in that** the central girder (7) has a vertical rod (56c) arranged so as to be inserted into the U-shaped part (15c) in order to be placed substantially aligned with the axis (30) of the concave recess.

8. Carriage according to any one of the preceding claims, **characterized in that** a first intermediate part (11, 12) is rigidly attached to each of the two brackets (5, 6) and **in that** a second intermediate part (35, 37) is rigidly attached to each of the lateral ends (34, 36) of the central girder (7), the means of connection between the central girder (7) and the brackets (5, 6) being borne by said intermediate parts.

9. Gantry crane comprising a first and a second lateral girder (2, 3) which are substantially parallel to each other and a carriage (4) according to any one of the preceding claims, said carriage (4) being positioned substantially transversely between the lateral girders (2, 3) and comprising a bracket at each of its lateral end portions, a first bracket (5) being suitable for engaging with the first lateral girder (2) and a second bracket (6) being suitable for engaging with the second lateral girder (3) so as to allow the carriage (4) to move in a longitudinal direction (x) substantially parallel to the lateral girders (2, 3).

## Patentansprüche

1. Wagen, der dazu bestimmt ist, im Wesentlichen quer zwischen einem ersten und einem zweiten Seitenstrahl (2, 3), die im Wesentlichen zueinander parallel sind, bewegt zu werden, wobei der Wagen (4) Folgendes umfasst:
- einen Bügel an jedem seiner äußeren Seitenteile, wobei ein erster Bügel (5) dazu geeignet ist, mit dem ersten Seitenstrahl (2) zusammenzuwirken, und wobei ein zweiter Bügel (6) dazu geeignet ist, mit dem zweiten Seitenstrahl (3) zusammenzuwirken, um die Bewegung des Wagens (4) in eine Längsrichtung (x) im Wesentlichen parallel zu den Seitenstrahlen zu ermöglichen:
- einen Mittelträger (7), der zwischen den Bügeln (5, 6) angeordnet ist;
- erste Verbindungsmittel (54, 29, 56c, 15c), die zwischen einem ersten Seitenende (34) des Mittelträgers (7) und dem ersten Bügel (5) angeordnet sind, und zweite Verbindungsmittel (58, 56a, 15a, 56b, 15b), die zwischen einem zweiten Seitenende (36) des Mittelträgers (7) und dem zweiten Bügel (6) angeordnet sind, wobei die Verbindungsmittel derart vorgesehen sind, dass sie die Bewegung eines Bügels in Bezug zum anderen entlang von sechs Freiheitsgraden mit einer begrenzten Amplitude ermöglichen, **dadurch gekennzeichnet, dass** die ersten Verbindungsmittel eine Kugelgelenkverbindung (54, 29) umfassen, und dass die zweiten Verbindungsmittel eine vertikale Abstützung (58, 15a) und Quergleitmittel (56a, 15a, 56b, 15b) umfassen, wobei die Abstützung und die Quergleitmittel derart vorgesehen sind, dass sie die Drehbewegung des Mittelstrahl (7) in Bezug zum ersten Bügel (5) um Längs- (x), Quer- (y) und Vertikalachsen (z) mit einer begrenzten Amplitude gestatten.

2. Wagen nach Anspruch 1, **dadurch gekennzeichnet, dass** die Quergleitmittel (56a, 15a, 56b, 15b) Mittel zur Begrenzung der Amplitude der Rotation des Mittelstrahl (7) in Bezug zum ersten Bügel (5) um die Längs-, Quer- und Vertikalachsen umfassen.

3. Wagen nach Anspruch 1 oder 2, **dadurch gekennzeichnet, dass** die ersten Verbindungsmittel ferner Quergleitmittel (56c, 15c) umfassen, die sich in einem Abstand zur Kugelgelenkverbindung befinden, wobei die Quergleitmittel derart angeordnet sind, dass sie Rotationsbewegung des Mittelstrahl (7) in Bezug zum ersten Bügel (5), um die Längs-, Quer- und Vertikalachsen mit einer begrenzten Amplitude gestatten.

4. Wagen nach einem der vorhergehenden Ansprüche, **dadurch gekennzeichnet, dass** mindestens eines der Quergleitmittel Folgendes umfasst:
- einerseits ein Stück (15a, 15b, 15c), das die Form eines U aufweist, dessen Schenkel (16, 17) sich in einer im Wesentlichen horizontalen Ebene befinden und quer zum Mittelstrahl (7) gerichtet sind, wobei die Enden (18) der Schenkel starr an einem Bügel (5, 6) des Wagens (4) befestigt sind;
- andererseits eine Stange (56a, 56b, 56c), die starr am Mittelstrahl (7) befestigt ist und sich orthogonal zum U-förmigen Stück (15a, 15b, 15c) erstreckt, wobei die Stange derart vorgesehen ist, dass sie in den Raum (19) eingesetzt wird, der zwischen den Schenkeln (16, 17) des U-förmigen Stücks mit einem Spiel gebildet ist, um das Quergleiten des Mittelstrahl (7) in Bezug zum äußersten Teil des Wagens (4) zu ermöglichen und die Rotation des Mittelstrahl (7) in Bezug zum ersten Bügel (5) um die Längs-, Quer- und Vertikalachsen gemäß einer gewissen Amplitude dank der Kugelgelenkverbindung zu gestatten.

5. Wagen nach Anspruch 4, **dadurch gekennzeichnet, dass** der zweite Bügel (6) zwei U-förmige Stücke (15a, 15b) umfasst, die vertikal ausgerichtet sind und sich in einem Abstand zueinander befinden, und dass der Mittelstrahl (7) mit zwei vertikalen Stangen (56a, 56b) versehen ist, die ausgerichtet und derart vorgesehen sind, dass sie jeweils in eines der U-förmigen Stücke (15a, 15b) eingesetzt werden.

6. Wagen nach einem der vorhergehenden Ansprüche, **dadurch gekennzeichnet, dass** der erste Bügel (5) eine konkave Lagerung (27, 29) umfasst, und dass sein konvexes Stück (54) von komplementärer Form zu jener der Lagerung starr am Mittelstrahl (7) befestigt ist, um mit der Lagerung zusammenzuwirken, um die Kugelgelenkverbindung zu bilden.

7. Wagen nach Anspruch 6, **dadurch gekennzeichnet, dass** der erste Bügel (5) einerseits eine konkave Lagerung (27, 29), die eine im Wesentlichen vertikale Achse (30) aufweist, und andererseits ein U-förmiges Stück (15c) umfasst, und dass der Mittelstrahl (7) mit einer vertikalen Stange (56c) versehen ist, die derart vorgesehen ist, dass sie in das U-förmige Stück (15c) eingesetzt wird, um im Wesentlichen mit der Achse (30) der konkaven Lagerung ausgerichtet angeordnet zu werden.

8. Wagen nach einem der vorhergehenden Ansprüche, **dadurch gekennzeichnet, dass** ein erstes Zwischenstück (11, 12) starr auf jedem der beiden Bügel (5, 6) befestigt ist, und dass ein zweites Zwischenstück (35, 37) starr an jedem der Seitenenden (34, 36) des Mittelstrahl (7) befestigt ist, wobei die Verbindungsmittel zwischen dem Mittelstrahl (7) und den Bügeln (5, 6) von den Zwischenstücken getragen werden.

9. Portalkran, umfassend einen ersten und einen zweiten im Wesentlichen parallelen Seitenstrahl (2, 3) und einen Wagen (4) nach einem der vorhergehenden Ansprüche, wobei der Wagen (4) im Wesentlichen quer zwischen den Seitenstrahlen (2, 3) angeordnet wird, und umfassend einen Bügel an jedem seiner äußeren Seitenteile, wobei ein erster Bügel (5) geeignet ist, mit dem ersten Seitenstrahl (2) zusammenzuwirken, und ein zweiter Bügel (6) geeignet ist, mit dem zweiten Seitenstrahl (3) zusammenzuwirken, um die Bewegung des Wagens (4) in eine Längsrichtung (x) im Wesentlichen parallel zu den Seitenstrahlen (2, 3) zu ermöglichen.
